# EUROPÄISCHE PATENTSCHRIFT

(11) **EP 3 138 258 B1**
(45) Veröffentlichungstag und Bekanntmachung des Hinweises auf die Patenterteilung: **11.07.2018**
(21) Anmeldenummer: 15720206.0
(22) Anmeldetag: 21.04.2015
(51) Int. Cl.: G09C 1/00, H04L 12/40, H04L 29/06, H04L 29/08, H04L 9/08

(54) **VERFAHREN ZUR ERZEUGUNG EINES GEHEIMNISSES ODER EINES SCHLÜSSELS IN EINEM NETZWERK**
METHOD FOR GENERATING A SECRET OR A KEY IN A NETWORK
PROCÉDÉ DE GÉNÉRATION D'UN SECRET OU D'UNE CLÉ DANS UN RÉSEAU

(30) Priorität: 28.04.2014 DE 102014207936
(43) Veröffentlichungstag der Anmeldung: 08.03.2017
(73) Patentinhaber: Robert Bosch GmbH, 70442 Stuttgart (DE)
(72) Erfinder: MUELLER, Andreas, 71336 Waiblingen (DE)
(86) Internationale Anmeldenummer: PCT/EP2015/058598
(87) Internationale Veröffentlichungsnummer: WO 2015/165775

(56) Entgegenhaltungen:
- DE-A1-102012 215 326
- "Road vehicles ? Controller area network (CAN) ? Part 1: Data link layer and physical signalling ; ISO+11898-1-2003", IEEE DRAFT; ISO+11898-1-2003, IEEE-SA, PISCATAWAY, NJ USA, Bd. msc.upamd, 18. November 2010 (2010-11-18), Seiten 1-52, XP017637056,
- "BOSCH CAN SPECIFICATION VERSION 2.0", BOSCH CAN SPECIFICATION VERSION 2.0, XX, XX, 1. September 1991 (1991-09-01), Seiten 1-69, XP002291910,
- Anonymous: "On-off keying - Wikipedia, the free encyclopedia", , 21. April 2014 (2014-04-21), XP055185652, Gefunden im Internet: URL:http://en.wikipedia.org/w/index.php?ti tle=On-off_keying&oldid=605206869 [gefunden am 2015-04-24]

## Beschreibung

### Technisches Gebiet

Die vorliegende Erfindung betrifft ein Verfahren zur Erzeugung eines Geheimnisses wie eines geheimen, kryptographischen Schlüssels in einem Netzwerk, insbesondere die Erzeugung eines gemeinsamen, geheimen Schlüssels in zwei Teilnehmern des Netzwerks. Auch Punkt-zu-Punkt-Verbindungen werden gewöhnlicher Weise zu den Netzwerken gezählt und sollen hier mit diesem Begriff ebenfalls adressiert sein. Dabei kommunizieren die beiden Teilnehmer über ein gemeinsam genutztes Übertragungsmedium. Hierbei werden logische Bitfolgen (bzw. allgemeiner: Wertfolgen) durch entsprechende Übertragungsverfahren als Signale bzw. Signalfolgen physikalisch übertragen. Das zugrundeliegende Kommunikationssystem kann z.B. ein CAN-Bus sein. Dieser sieht eine Übertragung dominanter und rezessiver Bits bzw. entsprechend dominanter und rezessiver Signale vor, wobei sich ein dominantes Signal bzw. Bit eines Teilnehmers des Netzwerks gegen rezessive Signale bzw. Bits durchsetzt. Ein Zustand entsprechend dem rezessiven Signal stellt sich auf dem Übertragungsmedium nur ein, wenn alle beteiligten Teilnehmer ein rezessives Signal zur Übertragung vorsehen bzw. wenn alle gleichzeitig sendenden Teilnehmer einen rezessiven Signalpegel übertragen.

### Stand der Technik

Eine sichere Kommunikation zwischen verschiedenen Geräten wird in einer zunehmend vernetzten Welt immer wichtiger und stellt in vielen Anwendungsbereichen eine wesentliche Voraussetzung für die Akzeptanz und somit auch den wirtschaftlichen Erfolg der entsprechenden Anwendungen dar. Dies umfasst - je nach Anwendung - verschiedene Schutzziele, wie beispielsweise die Wahrung der Vertraulichkeit der zu übertragenden Daten, die gegenseitige Authentifizierung der beteiligten Knoten oder die Sicherstellung der Datenintegrität. Zur Erreichung dieser Schutzziele kommen üblicherweise geeignete kryptographische Verfahren zum Einsatz, die man generell in zwei verschiedene Kategorien unterteilen kann: Zum einen symmetrische Verfahren, bei denen Sender und Empfänger über denselben kryptographischen Schlüssel verfügen, zum anderen asymmetrische Verfahren, bei denen der Sender die zu übertragenden Daten mit dem öffentlichen (d.h. auch einem potenziellen Angreifer möglicherweise bekannten) Schlüssel des Empfängers verschlüsselt, die Entschlüsselung aber nur mit dem zugehörigen privaten Schlüssel erfolgen kann, der idealerweise nur dem Empfänger bekannt ist.

Asymmetrische Verfahren haben unter anderem den Nachteil, dass sie in der Regel eine sehr hohe Rechenkomplexität aufweisen. Damit sind sie nur bedingt für ressourcenbeschränkte Knoten, wie z.B. Sensoren, Aktuatoren, o.ä., geeignet, die üblicherweise nur über eine relativ geringe Rechenleistung sowie geringen Speicher verfügen und energieeffizient arbeiten sollen, beispielsweise aufgrund von Batteriebetrieb oder dem Einsatz von Energy Harvesting. Darüber hinaus steht oftmals nur eine begrenzte Bandbreite zur Datenübertragung zur Verfügung, was den Austausch von asymmetrischen Schlüsseln mit Längen von 2048 Bit oder noch mehr unattraktiv macht.

Bei symmetrischen Verfahren hingegen muss gewährleistet sein, dass sowohl Empfänger als auch Sender über den gleichen Schlüssel verfügen. Das zugehörige Schlüsselmanagement stellt dabei generell eine sehr anspruchsvolle Aufgabe dar. Im Bereich des Mobilfunks werden Schlüssel beispielsweise mit Hilfe von SIM-Karten in ein Mobiltelefon eingebracht und das zugehörige Netz kann dann der eindeutigen Kennung einer SIM-Karte den entsprechenden Schlüssel zuordnen. Im Fall von Wireless LANs hingegen erfolgt üblicherweise eine manuelle Eingabe der zu verwendenden Schlüssel (in der Regel durch die Eingabe eines Passwortes) bei der Einrichtung eines Netzwerkes. Ein solches Schlüsselmanagement wird allerdings schnell sehr aufwändig und impraktikabel wenn man eine sehr große Anzahl von Knoten hat, beispielsweise in einem Sensornetzwerk oder anderen Maschine-zu-Maschine-Kommunikationssystemen, z.B. auch CANbasierten Fahrzeugnetzwerken. Darüber hinaus ist eine Änderung der zu verwendenden Schlüssel oftmals überhaupt nicht bzw. nur mit sehr großem Aufwand möglich.

Verfahren zur Absicherung von Sensordaten gegen Manipulation und die Sicherstellung einer Transaktionsauthentifizierung, z.B. in einem Kraftfahrzeugnetzwerk, mit Hilfe gängiger Verschlüsselungsverfahren sind z.B. in der DE 102009002396 A1 und in der DE 102009045133 A1 offenbart.

Seit einiger Zeit werden zudem unter dem Schlagwort "Physical Layer Security" neuartige Ansätze untersucht und entwickelt, mit Hilfe derer Schlüssel für symmetrische Verfahren automatisch auf der Grundlage physikalischer Eigenschaften der Übertragungskanäle zwischen den involvierten Knoten erzeugt werden können. Dabei nutzt man die Reziprozität und die inhärente Zufälligkeit dieser Übertragungskanäle aus. Insbesondere bei drahtgebundenen oder optischen Systemen ist dieser Ansatz oftmals allerdings nur bedingt geeignet, da entsprechende Kanäle üblicherweise nur eine sehr eingeschränkte zeitliche Variabilität aufweisen und ein Angreifer beispielsweise mit Hilfe einer Modellbildung relativ gut Rückschlüsse auf die Kanalparameter zwischen dem Sender und dem Empfänger ziehen kann. Ein entsprechendes Verfahren ist beispielsweise der DE 10 2012 215326 A1 zu entnehmen.

Die Veröffentlichung *"*Road vehicles - Controller area network (CAN) - Part 1: Data link layer and physical signalling; ISO+11898-1-2003", IEEE DRAFT; ISO+11898-1-2003, IEEE-SA, PISCATAWAY, NJ USA, Bd. msc.upamd, 18 November 2010 (2010-11-18), Seiten 1 - 52, XP017637056 beinhaltet Teile des internationalen Standards ISO 11898-1.

### Offenbarung der Erfindung

Die Verfahren zur Generierung eines Geheimnisses wie eines kryptographischen Schlüssels gemäß den unabhängigen Ansprüchen erfordern keinerlei manuellen Eingriff und ermöglichen somit den automatisierten Aufbau sicherer Kommunikationsbeziehungen bzw. -verbindungen zwischen zwei Knoten. Zudem weisen die Verfahren eine sehr geringe Komplexität auf, insbesondere hinsichtlich der erforderlichen Hardwareauslegung, wie z.B. der benötigten Speicherressourcen und Rechenleistung, und sie gehen mit einem geringen Energie- und Zeitbedarf einher. Darüber hinaus bieten die Verfahren sehr hohe Schlüsselgenerierungsraten bei gleichzeitig sehr kleiner Fehlerwahrscheinlichkeit.

Dabei gehen die Verfahren davon aus, dass Teilnehmer in einem Netzwerk über einen Kommunikationskanal miteinander kommunizieren. Sie übertragen dabei insbesondere logische Wertfolgen, (falls es sich um binäre Logik handelt, Bitfolgen) mit Hilfe von physikalischen Signalen auf dem Übertragungskanal. Auch wenn mögliche Überlagerungen auf dem Übertragungskanal durch die Signale, also auf der physikalischen Ebene, stattfinden, wird in der Beschreibung im Folgenden vorranging die logische Ebene betrachtet. Es werden somit die übertragenen, logischen Wertfolgen sowie deren logische Überlagerung betrachtet.

Teilnehmer des Netzwerks können somit erste Signale (die beispielsweise dem logischen Bit "1" zugeordnet sind) und zweite Signale (die beispielsweise dem logischen Bit "0" zugeordnet sind) auf den Kommunikationskanal geben und resultierende Signale auf dem Kommunikationskanal detektieren. Übertragen nun zwei Teilnehmer (weitgehend) gleichzeitig jeweils eine Signalfolge, so können die Teilnehmer die daraus resultierende Überlagerung auf dem Kommunikationskanal detektieren. Das effektive, aus der (weitgehend) gleichzeitigen Übertragung zweier (unabhängiger) Signale resultierende Signal auf dem Kommunikationskanal lässt sich dann wiederum einem (oder mehreren) bestimmten logischen Wert (oder Werten) zuordnen.

Die Übertragung muss dabei insofern weitgehend synchron sein, dass eine Überlagerung der einzelnen Signale einer Signalfolge auf dem Übertragungsmedium erfolgt, insbesondere, dass sich das Signal entsprechend dem n-ten logischen Wert bzw. Bit des ersten Teilnehmers mit dem Signal entsprechend dem n-ten logischen Wert bzw. Bit des zweiten Teilnehmers zumindest teilweise überlagert. Diese Überlagerung sollte jeweils dafür ausreichend lange sein, dass die Teilnehmer die Überlagerung erfassen bzw. den entsprechenden Überlagerungswert ermitteln können.

Die Überlagerung kann dabei durch Arbitrierungsmechanismen oder durch physikalische Signalüberlagerung bestimmt sein. Mit Arbitrierungsmechanismus ist beispielsweise der Fall gemeint, dass ein Knoten einen rezessiven Pegel anlegen möchte, aber auf dem Bus einen dominanten Pegel detektiert und somit die Übertragung unterlässt. In diesem Fall kommt es zu keiner physikalischen Überlagerung zweier Signale, sondern es ist nur das dominante Signal auf dem Übertragungskanal zu sehen.

Aus der resultierenden Wertfolge der Überlagerung und der eigenen Wertfolge können die Teilnehmer dann einen Schlüssel generieren, der einem außenstehenden Angreifer gegenüber geheim ist. Grund dafür ist, dass der außenstehende Angreifer, der beispielsweise die auf dem gemeinsam genutzten Übertragungsmedium anliegenden effektiven Gesamtsignale abhören kann, nur die Überlagerung der Wertfolgen sieht, aber nicht die Informationen über die einzelnen Wertfolgen der Teilnehmer hat. Damit verfügen die Teilnehmer über mehr Informationen, die sie gegenüber dem Angreifer zur Generierung eines geheimen Schlüssels nutzen können.

Besonders vorteilhaft kann das Verfahren in einem Netzwerk eingesetzt werden, in dem es einen dominanten Wert (physikalisch: ein dominantes Signal) gibt, der sich durchsetzt, wenn nur ein Teilnehmer ihn auf dem Übertragungskanal anlegt, und einen rezessiven Wert (physikalisch: ein rezessives Signal), der auf dem Übertragungskanal nur resultiert, wenn beide bzw. alle Teilnehmer einen rezessiven Wert übertragen. Aufgrund der hiermit klar vorgegebenen Überlagerungsregeln können die Teilnehmer eines solchen Netzwerks aus resultierenden Überlagerungsfolgen besonders einfach Informationen zur Schlüsselgenerierung ableiten. Alternativ kann die Übertragung eines rezessiven Wertes von mindestens einem der Teilnehmer auch dadurch ersetzt werden, dass an dieser Stelle der Wertfolge bzw. als einer der mindestens zwei möglichen Werte gar nichts übertragen wird.

Die Teilnehmerwertfolgen, welche von den Teilnehmern weitgehend simultan auf den Übertragungskanal gegeben werden, werden im Vorfeld in den jeweiligen Teilnehmern selbst mit Hilfe eines Zufallsgenerators oder Pseudozufallsgenerators erzeugt. Da die resultierende Überlagerungsfolge auf dem Übertragungskanal einem potentiellen Angreifer zugänglich sein kann, ist es für die Sicherheit der späteren Kommunikation besonders vorteilhaft, wenn es der Angreifer möglichst schwer hat, auf die einzelnen Wertfolgen der Teilnehmer zu schließen, wenn diese also in den Teilnehmern lokal sowie zufällig oder zumindest pseudozufällig erzeugt werden.

In einer bevorzugten Variante übertragen die Teilnehmer Teil-Wertfolgen mit einem ersten Teil und einem zweiten Teil, wobei der zweite Teil dem invertierten ersten Teil entspricht. Während für einen Angreifer die beiden Teile in der Überlagerung (zumindest auf der logischen Ebene) an den Stellen gleich aussehen, an denen die beiden Teilnehmer unterschiedliche Werte übertragen, resultieren für die Teilnehmer auch hieraus Zusatzinformationen über die Teil-Wertfolgen des anderen Teilnehmers. Diese können wiederum zur Schlüsselgenerierung herangezogen werden und diese somit sicherer gestalten. Dabei ist es unerheblich, ob die Teil-Wertfolgen unmittelbar aneinander anschließen. Es kann auch Unterbrechungen z.B. zwischen den Teil-Wertfolgen entsprechend dem nichtinvertierten und dem invertierten Teil der Wertfolge geben, solange beide Teilnehmer die Übertragung wieder (weitgehend) simultan zueinander aufnehmen. Die Teil-Wertfolgen können also sowohl in separaten Nachrichten als auch in einer einzigen Nachricht übertragen werden (z.B. erste 32 Bits = orginal, zweite 32 Bits = invertiert). Die Zusatzinformationen aus der Übermittlung solcher zueinander invertierter Wertfolgen können die Teilnehmer durch eine Verknüpfung der beiden resultierenden Teile der Überlagerungswertfolge extrahieren, insbesondere durch eine ODER-Verknüpfung.

In dieser bevorzugten Variante können die Teilnehmer in einer vorteilhaften Ausführung diejenigen Stellen ihrer Teilnehmerwertfolge streichen, die einen Wert identisch mit einem Wert an der gleichen Position der anderen Teilnehmerwertfolge aufweisen, und damit jeweils eine verkürzte Wertfolge erhalten. Die hierzu nötigen Informationen können die Teilnehmer aus den Zusatzinformationen durch die übermittelten invertierten Teilwertfolgen ableiten. Die so gestrichenen Stellen entsprechen Informationen, die ein Angreifer gegebenenfalls relativ leicht aus der Überlagerungsfolge ableiten kann (zumindest wenn er das Übertragungsschema der Teilnehmer kennt), die also die Sicherheit eines aus der Wertfolge generierten Schlüssels reduzieren würden. Durch Invertierung der so verkürzten Wertfolge kann nun einer der Teilnehmer eine Wertfolge erhalten, die der verkürzten Wertfolge des anderen Teilnehmers entspricht. Diese gemeinsame, geheime Wertfolge können die Teilnehmer nun als Basis für einen gemeinsamen, geheimen Schlüssel heranziehen.

Die beschriebenen Verfahren sind besonders gut in einem CAN-, TTCAN- oder CAN-FD-Bussystem umzusetzen. Hier wird ein rezessiver Buspegel durch einen dominanten Buspegel verdrängt. Die Überlagerung von Werten bzw. Signalen der Teilnehmer folgt damit festgelegten Regeln, welche die Teilnehmer zur Ableitung von Informationen aus dem überlagerten Wert bzw. Signal und dem von ihnen übertragenen Wert bzw. Signal nutzen können. Auch andere Kommunikationssysteme wie LIN und I2C sind für einen Einsatz dieser Verfahren gut geeignet.

Alternativ kann das Verfahren aber zum Beispiel auch in einem Netzwerk mit On-Off-Keying-Amplitudenumtastung eingesetzt werden. Hier ist ebenfalls die Überlagerung festgelegt, indem den Teilnehmern als Signale "Übertragung" und "keine Übertragung" zur Auswahl stehen und das Überlagerungssignal dem Signal "Übertragung" entspricht, wenn einer oder beide der Teilnehmer übertragen, und dem Signal "keine Übertragung" entspricht, wenn beide Teilnehmer nicht übertragen.

Zeigen die beiden Teilnehmer Charakteristika in der Übertragung wie z.B. unterschiedliche Signalamplituden oder unterschiedliche Signalübertragungsstartzeiten, so kann ein Angreifer durch sensitive Messungen auf dem Übertragungskanal gegebenenfalls Informationen über die einzelnen Wertfolgen der jeweiligen Teilnehmer ableiten. Da in diesen Informationen die Basis für den geheimen Schlüssel liegt, wird das Ableiten dieser Informationen dem Angreifer in einer weiteren bevorzugten Ausführung der vorgestellten Verfahren erschwert. Hierzu variiert mindestens einer der Teilnehmer Übertragungsparameter während der Übertragung. Z.B. kann von Wert zu Wert einer Wertfolge eine unterschiedliche Signalamplitude gewählt werden oder die Übertragungsstart- oder -endzeit von Wert zu Wert einer Wertfolge variiert werden. Hierbei kann es sich beispielsweise um eine zufällige Variation handeln. Somit wird es einem Angreifer erschwert, aus Charakteristika in der Übertragung der einzelnen Angreifer Informationen abzuleiten.

Während das Verfahren für zwei Teilnehmer in einem Netzwerk beschrieben wurde, kann auch bereits durch einen Teilnehmer eines Netzwerks ein geheimer Schlüssel aus einer eigenen Signalfolge und aus einer Überlagerung dieser mit der Signalfolge eines zweiten Teilnehmers abgeleitet werden. Ein Netzwerk oder ein Teilnehmer eines Netzwerks sind hierzu eingerichtet, indem sie über elektronische Speicher- und Rechenressourcen verfügen, die Schritte eines entsprechenden Verfahrens auszuführen. Auf einem Speichermedium eines solchen Teilnehmers oder auf den verteilten Speicherressourcen eines Netzwerks kann auch ein Computerprogramm abgelegt sein, dass dazu eingerichtet ist, alle Schritte eines entsprechenden Verfahrens auszuführen, wenn es in dem Teilnehmer oder in dem Netzwerk abgearbeitet wird.

### Zeichnungen

Nachfolgend ist die Erfindung unter Bezugnahme auf die beiliegenden Zeichnungen und anhand von Ausführungsbeispielen näher beschrieben. Dabei zeigen
Fig. 1 schematisch den Aufbau eines beispielhaften, zugrundeliegenden Kommunikationssystems,
Fig. 2 schematisch einen linearen Bus als Beispiel eines zugrundeliegenden Kommunikationssystems,
Fig. 3 schematisch beispielhafte Signalfolgen zweier Teilnehmer eines Netzwerks sowie eine resultierende Überlagerungswertfolge auf einem Übertragungskanal zwischen den Teilnehmern und
Fig. 4 schematisch den Ablauf eines beispielhaften Verfahrens zur Schlüsselgenerierung zwischen zwei Teilnehmern eines Netzwerks.

### Beschreibung der Ausführungsbeispiele

Die vorliegende Erfindung bezieht sich auf ein Verfahren zur Generierung eines Geheimnisses wie (geheimer) symmetrischer kryptographischer Schlüssel zwischen zwei Knoten eines Kommunikationssystems (Teilnehmer eines Netzwerkes), die über ein gemeinsam genutztes Medium (Übertragungskanal des Netzwerks) miteinander kommunizieren. Die Generierung bzw. Aushandlung des Geheimnisses, insbesondere der kryptographischen Schlüssel basiert dabei auf einem öffentlichen Datenaustausch zwischen den zwei Teilnehmern, wobei es einem möglichen mithörenden Dritten als Angreifer aber dennoch nicht oder nur sehr schwer möglich ist, Rückschlüsse auf die generierten Schlüssel zu ziehen. Mit der Erfindung ist es somit möglich, zwischen zwei verschiedenen Teilnehmern eines Netzwerks vollständig automatisiert und sicher entsprechende symmetrische kryptographische Schlüssel zu etablieren, um darauf aufbauend dann bestimmte Sicherheitsfunktionen, wie z.B. eine Datenverschlüsselung, zu realisieren. Wie im Detail noch beschrieben wird hierzu zunächst ein gemeinsames Geheimnis etabliert, welches zur Schlüsselgenerierung herangezogen werden kann. Ein solches gemeinsames Geheimnis kann aber grundsätzlich auch zu anderen Zwecken als für kryptographische Schlüssel im engeren Sinne genutzt werden, z.B. als One-Time-Pad.

Die Erfindung eignet sich für eine Vielzahl drahtgebundener oder drahtloser sowie auch optischer Netzwerke bzw. Kommunikationssysteme, insbesondere auch solche, bei denen die verschiedenen Teilnehmer über einen linearen Bus miteinander kommunizieren und der Medienzugriff auf diesen Bus mithilfe einer bitweisen Bus-Arbitrierung erfolgt. Dieses Prinzip stellt beispielsweise die Grundlage des weit verbreiteten CAN-Busses dar. Mögliche Einsatzgebiete der Erfindung umfassen dementsprechend insbesondere auch CAN-basierte Fahrzeugnetzwerke sowie CAN-basierte Netzwerke in der Automatisierungstechnik.

Die vorliegende Erfindung beschreibt einen Ansatz, mit dem automatisiert symmetrische kryptographische Schlüssel in einem, bzw. insbesondere zwischen zwei Knoten eines Netzwerks generiert werden können. Diese Generierung erfolgt dabei unter Ausnutzung von Eigenschaften der entsprechenden Übertragungsschicht. Anders als bei den gängigen Ansätzen der "Physical Layer Security" werden dafür aber nicht physikalische Parameter des Übertragungskanal wie Übertragungsstärke etc. ausgewertet. Vielmehr gibt es dazu einen öffentlichen Datenaustausch zwischen den beteiligten Knoten, der dank der Eigenschaften des Kommunikationssystems und/oder des verwendeten Modulationsverfahrens einem möglichen lauschenden Angreifer keine, bzw. keine ausreichenden Rückschlüsse auf den daraus ausgehandelten Schlüssel ermöglicht.

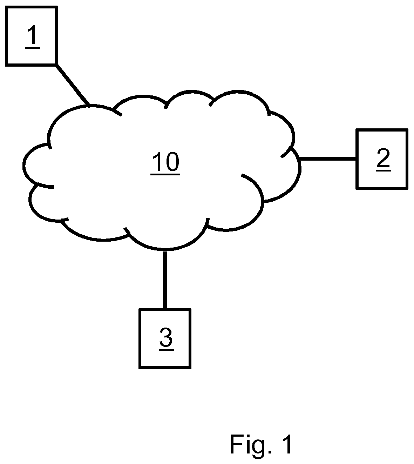

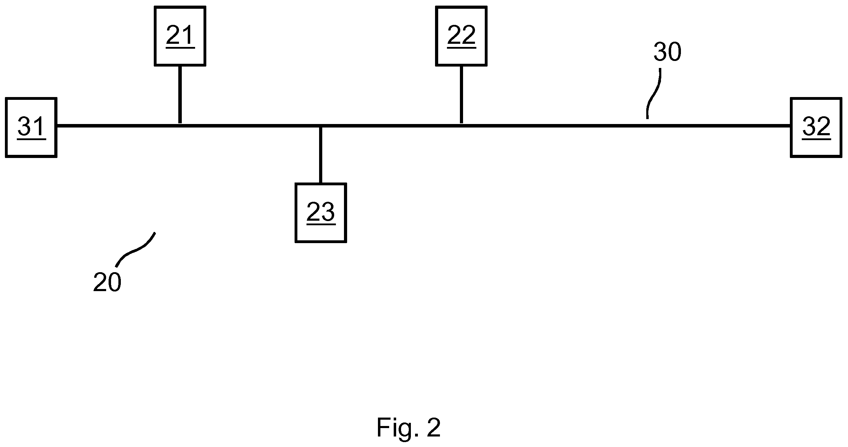

Im Folgenden wird eine Anordnung betrachtet, wie sie abstrakt in Fig. 1 dargestellt ist. Dabei können verschiedene Teilnehmer 1, 2 und 3 über ein so genanntes geteiltes Übertragungsmedium ("shared medium") 10 miteinander kommunizieren. In einer vorteilhaften Ausprägung der Erfindung entspricht dieses geteilte Übertragungsmedium einem linearen Bus (drahtgebunden oder optisch) 30, wie er beispielhaft in Fig. 2 dargestellt ist. Das Netzwerk 20 in Fig. 2 besteht aus eben diesem linearen Bus 30 als geteiltes Übertragungsmedium (beispielsweise als drahtgebundener Übertragungskanal), Teilnehmern bzw. Knoten 21, 22 und 23 sowie (optionalen) Busterminierungen 31 und 32.

Im Folgenden wird für die Kommunikation zwischen den verschiedenen Knoten 21, 22 und 23 angenommen, dass sie durch die Unterscheidung von dominanten und rezessiven Werten gekennzeichnet ist. In diesem Beispiel werden als mögliche Wert die Bits "0" und "1" angenommen. Dabei kann ein dominantes Bit (z.B. das logische Bit ,0') ein gleichzeitig übertragenes rezessives Bit (z.B. das logische Bit ,1') quasi verdrängen bzw. überschreiben.

Ein Beispiel für ein solches Übertragungsverfahren ist das so genannte On-Off-Keying (On-Off-Keying-Amplitudenumtastung), bei dem genau zwei Übertragungszustände unterschieden werden: Im ersten Fall (Wert ,On', bzw. "0") wird ein Signal übertragen, beispielsweise in Form eines einfachen Trägersignals, im anderen Fall (Wert ,Off', bzw. "1") wird kein Signal übertragen. Der Zustand ,On' ist dabei dominant während der Zustand ,Off' rezessiv ist.

Ein weiteres Beispiel für ein entsprechendes Kommunikationssystem, das diese Unterscheidung von dominanten und rezessiven Bits unterstützt, ist ein (drahtgebundenes oder optisches) System basierend auf einer bitweisen Bus-Arbitrierung, wie sie beispielsweise beim CAN-Bus zum Einsatz kommt. Die Grundidee dabei besteht ebenfalls darin, dass wenn beispielsweise zwei Knoten gleichzeitig ein Signal übertragen wollen und der eine Knoten eine ,1' überträgt, wohingegen der zweite Knoten eine ,0' sendet, die ,0' "gewinnt" (also das dominante Bit), d.h. der Signalpegel, der auf dem Bus gemessen werden kann, entspricht einer logischen ,0'. Bei CAN wird dieser Mechanismus insbesondere zur Auflösung von möglichen Kollisionen benutzt. Dabei werden höherpriore Nachrichten (d.h. Nachrichten mit früherem, dominanten Signalpegel) vorrangig übertragen, indem jeder Knoten bei der Übertragung seines CAN-Identifiers bitweise gleichzeitig den Signalpegel auf dem Bus überwacht. Sofern der Knoten selbst ein rezessives Bit überträgt, aber auf dem Bus ein dominantes Bit detektiert wird, bricht der entsprechende Knoten seinen Übertragungsversuch zugunsten der höherprioren Nachricht (mit dem früheren dominanten Bit) ab.

Die Unterscheidung von dominanten und rezessiven Bits erlaubt es, das geteilte Übertragungsmedium als eine Art binären Operator aufzufassen, der die verschiedenen Eingangsbits (=alle gleichzeitig übertragenen Bits) mit Hilfe einer logischen UND-Funktion miteinander verknüpft.

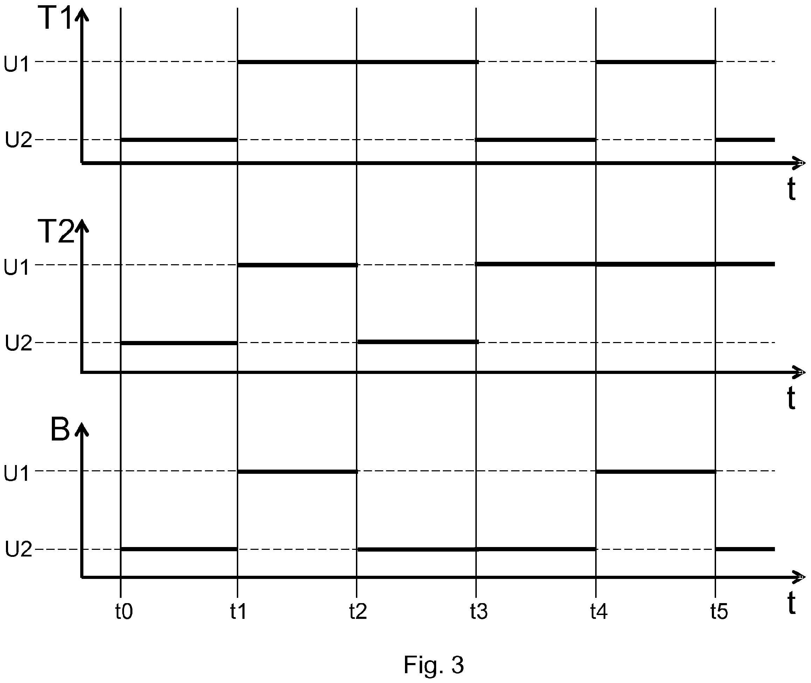

In Fig. 3 ist beispielsweise dargestellt, wie ein Teilnehmer 1 (T1) die Bitfolge 0, 1, 1, 0, 1 zur Sendung zwischen den Zeitpunkten t0 und t5 über den Übertragungskanal bereit hält. Teilnehmer 2 (T2) hält die Bitfolge 0, 1, 0, 1, 1 zur Sendung zwischen Zeitpunkten t0 und t5 über den Übertragungskanal bereit. Mit den oben beschriebenen Eigenschaften des Kommunikationssystems und unter der Annahme, dass es sich in diesem Beispiel bei dem Bitpegel "0" um das dominante Bit handelt, wird auf dem Bus (B) die Bitfolge 0, 1, 0, 0, 1 zu sehen sein. Nur zwischen den Zeitpunkten t1 und t2 sowie zwischen t4 und t5 sehen sowohl Teilnehmer 1 (T1) als auch Teilnehmer 2 (T2) ein rezessives Bit "1" vor, so dass nur hier die logische UND-Verknüpfung in einen Bitpegel von "1" auf dem Bus (B) resultiert.

Unter Ausnutzung dieser Eigenschaften des Übertragungsverfahrens des Kommunikationssystems kann eine Schlüsselgenerierung zwischen zwei Teilnehmern eines entsprechenden Netzwerks nun erfolgen, indem die Teilnehmer eine Überlagerung von Bitfolgen der beiden Teilnehmer auf dem Übertragungsmedium detektieren und aus dieser Information gemeinsam mit Informationen über die selbst gesendete Bitfolge einen gemeinsamen (symmetrischen), geheimen Schlüssel erzeugen.

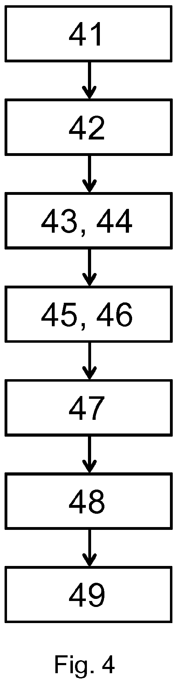

Eine beispielhafte, besonders bevorzugte Realisierung wird im Folgenden anhand von Fig. 4 erläutert.

Der Prozess zur Generierung eines symmetrischen Schlüsselpaars wird in Schritt 41 von einem der in diesem Beispiel zwei beteiligten Knoten (Teilnehmer 1 und Teilnehmer 2) gestartet. Dies kann beispielsweise durch das Versenden einer speziellen Nachricht bzw. eines speziellen Nachrichtenheaders erfolgen.

Sowohl Teilnehmer 1 als auch Teilnehmer 2 generieren in Schritt 42 zunächst lokal (d.h. intern und voneinander unabhängig) eine Bitsequenz. Vorzugsweise ist diese Bitfolge mindestens zweimal, insbesondere mindestens dreimal so lang wie der als Resultat des Verfahrens erwünschte gemeinsame Schlüssel. Die Bitfolge wird vorzugsweise jeweils als zufällige oder pseudozufällige Bitabfolge, beispielsweise mit Hilfe eines geeigneten Zufallszahlengenerators oder Pseudozufallszahlengenerators erzeugt.

*Beispiel für lokale Bitfolgen der Länge 20 Bits:*
▪ *Erzeugte Bitsequenz von Teilnehmer 1:*
   *S_{T1}* = *01001101110010110010*
▪ *Erzeugte Bitsequenz von Teilnehmer 2:*
   *S_{T2}* = 10010001101101001011

In einem Schritt 43 übertragen Teilnehmer 1 und Teilnehmer 2 zueinander (weitgehend) synchron ihre jeweils erzeugten Bitsequenzen über das geteilte Übertragungsmedium (unter Verwendung des Übertragungsverfahrens mit dominanten und rezessiven Bits, wie zuvor bereits erläutert). Dabei sind verschiedene Möglichkeiten zur Synchronisierung der entsprechenden Übertragungen denkbar. So könnte beispielsweise entweder Teilnehmer 1 oder Teilnehmer 2 zunächst eine geeignete Synchronisationsnachricht an den jeweils anderen Knoten senden und nach einer bestimmten Zeitdauer im Anschluss an die vollständige Übertragung dieser Nachricht dann die Übertragung der eigentlichen Bitsequenzen starten. Genauso ist es aber auch denkbar, dass von einem der beiden Knoten nur ein geeigneter Nachrichtenheader übertragen wird (z.B. ein CAN-Header bestehend aus Arbitrierungsfeld und Kontrollfeld) und während der zugehörigen Payload-Phase dann beide Knoten gleichzeitig ihre generierten Bitsequenzen (weitgehend) synchron übermitteln. In einer Variante des Verfahrens können die in Schritt 42 generierten Bitsequenzen eines Teilnehmers in Schritt 43 auch auf mehrere Nachrichten verteilt übertragen werden können, beispielsweise wenn dies die (Maximal-)Größen der entsprechenden Nachrichten erforderlich machen.

Auch in dieser Variante erfolgt die Übertragung der auf entsprechend viele, entsprechend große Nachrichten verteilten Bitsequenzen des anderen Teilnehmers wiederum (weitgehend) synchron.

Auf dem geteilten Übertragungsmedium überlagern sich die beiden Bitsequenzen dann, wobei aufgrund der zuvor geforderten Eigenschaft des Systems mit der Unterscheidung von dominanten und rezessiven Bits die einzelnen Bits von Teilnehmer 1 und Teilnehmer 2 eine Überlagerung ergeben, im genannten Beispiel de facto UND-verknüpft werden. Damit ergibt sich auf dem Übertragungskanal eine entsprechende Überlagerung, die beispielsweise ein mithörender dritter Teilnehmer detektieren könnte.

*Beispiel einer Überlagerungsbitfolge für die obigen, lokalen Bitfolgen:*
- *Effektive Bitsequenz auf dem Übertragungskanal:*
   *S_{eff}* = *S_{T1} AND S_{T2}* = *00000001100000000010*

Sowohl Teilnehmer 1 als auch Teilnehmer 2 detektieren während der Übertragung ihrer Bitsequenzen des Schritts 43 in einem parallelen Schritt 44 die effektiven (überlagerten) Bitsequenzen S_{eff} auf dem geteilten Übertragungsmedium. Für das Beispiel des CAN-Busses wird dies auch in konventionellen Systemen während der Arbitrierungsphase gewöhnlicherweise ohnehin gemacht.

Für Systeme mit ,On-Off-Keying' (drahtlos, drahtgebunden oder optisch) ist dies entsprechend ebenfalls möglich. Der praktischen Realisierbarkeit kommt hierbei insbesondere zugute, dass bei einem solchen System der Zustand ,On' dominant und der Zustand ,Off' rezessiv ist (wie zuvor bereits erläutert). Folglich weiß ein Knoten auch ohne Messung, dass der effektive Zustand auf dem "Shared Medium" dominant ist sofern der Knoten selbst ein dominantes Bit gesendet hat. Hat ein Knoten hingegen ein rezessives Bit gesendet, kennt er den Zustand auf dem geteilten Übertragungsmedium zunächst nicht ohne Weiteres, allerdings kann er in diesem Fall durch eine geeignete Messung bestimmen, wie dieser aussieht. Da der Knoten selbst in diesem Fall nichts sendet, gibt es nämlich auch keine Probleme mit so genannter Selbstinterferenz, die speziell im Fall von drahtlosen Systemen ansonsten eine aufwändige Echokompensation erforderlich machen würde.

In einem nächsten Schritt 45 übertragen sowohl Teilnehmer 1 als auch Teilnehmer 2 ebenfalls wieder (weitgehend) synchron ihre initialen Bitsequenzen S_{T1} und S_{T2}, diesmal allerdings invertiert. Die Synchronisierung der entsprechenden Übertragungen kann dabei wieder genau auf dieselbe Art und Weise realisiert werden, wie oben beschrieben. Auf dem geteilten Kommunikationsmedium werden die beiden Sequenzen dann wieder miteinander UND-verknüpft. Teilnehmer 1 und 2 ermitteln wiederum die effektiven, überlagerten Bitsequenzen S_{eff} auf dem geteilten Übertragungsmedium.

*Beispiel für die obigen Bitfolgen:*
▪ *Invertierte Bitsequenz von Teilnehmer 1:*
   *S_{T1}*' = *10110010001101001101*
▪ *Invertierte Bitsequenz von Teilnehmer 2:*
   *S_{T2}'* = *01101110010010110100*
▪ *Effektive, überlagerte Bitsequenz auf dem Kanal:*
   *S_{eff}'* = *S_{T1}' AND S_{T2}' = 00100010000000000100*

Sowohl Teilnehmer 1 als auch Teilnehmer 2 ermitteln während der Übertragung ihrer nun invertierten Bitsequenzen dann wieder die effektiven, überlagerten Bitsequenzen auf dem geteilten Übertragungsmedium. Zu diesem Zeitpunkt kennen somit beide Knoten (Teilnehmer 1 und Teilnehmer 2), sowie auch ein möglicher Angreifer (z.B. Teilnehmer 3), der die Kommunikation auf dem geteilten Übertragungsmedium mithört, die effektiven, überlagerten Bitsequenzen S_{eff} und S_{eff}'. Im Gegensatz zum Angreifer bzw. dritten Teilnehmer kennt aber Teilnehmer 1 noch seine initial erzeugte, lokale Bitsequenz S_{T1} und Teilnehmer 2 seine initial erzeugte, lokale Bitsequenz S_{T2}. Teilnehmer 1 wiederum kennt aber nicht die initial erzeugte, lokale Bitsequenz von Teilnehmer 2 und Teilnehmer 2 nicht die initial erzeugte, lokale Bitsequenz von Teilnehmer 1. Die Detektion der Überlagerungsbitfolge erfolgt wiederum während der Übertragung in Schritt 46.

Alternativ zu dieser beispielhaften Ausführungsvariante können Teilnehmer 1 und Teilnehmer 2 ihre invertierte, lokale Bitfolge auch direkt mit bzw. direkt nach ihrer ursprünglichen, lokalen Bitfolge versenden, d.h. Schritte 45 und 46 erfolgen mit den Schritten 43 und 44. Die ursprüngliche und die invertierte Bitfolge können dabei in einer Nachricht, aber auch in separaten Nachrichten als Teil-Bitfolgen übermittelt werden.

In Schritt 47 verknüpfen Teilnehmer 1 und Teilnehmer 2 nun jeweils lokal (also intern) die effektiven, überlagerten Bitfolgen (S_{eff} und S_{eff}'), insbesondere mit einer logischen ODER-Funktion.
*Beispiel für die obigen Bitfolgen:*
*S_{ges}* = S_{eff} OR S_{eff}' = *00100011100000000110*

Die einzelnen Bits in der aus der ODER-Verknüpfung resultierenden Bitsequenz (S_{ges}) geben nun an, ob die entsprechenden Bits von S_{T1} und S_{T2} identisch oder unterschiedlich sind. Ist das n-te Bit innerhalb von S_{ges} beispielsweise eine ,0', so bedeutet dies, dass das n-te Bit innerhalb von S_{T1} invers zu dem entsprechenden Bit innerhalb von S_{T2} ist. Gleichermaßen gilt, dass wenn das n-te Bit innerhalb von S_{ges} eine ,1' ist, die entsprechenden Bits innerhalb von S_{Alice} und S_{Bob} identisch sind.

Teilnehmer 1 und Teilnehmer 2 streichen daraufhin in Schritt 48 basierend auf der aus der ODER-Verknüpfung erhaltenen Bitsequenz S_{ges} in ihren ursprünglichen, initialen Bitsequenzen S_{T1} und S_{T2} alle Bits, die in beiden Sequenzen identisch sind. Dies führt folglich zu entsprechend verkürzten Bitsequenzen.

*Beispiel für die obigen Bitfolgen:*
▪ *Verkürzte Bitsequenz von Teilnehmer 1:*
   *S_{T1,V}* = *01011100101100*
▪ *Verkürzte Bitsequenz von Teilnehmer 2:*
   *S_{T2,V}* = *10100011010011*

Die resultierenden, verkürzten Bitsequenzen S_{T1,V} und S_{T2,V} sind nun gerade invers zueinander. Somit kann einer der beiden Teilnehmer durch Inversion seiner verkürzten Bitsequenz exakt diejenige verkürzte Bitsequenz ermitteln, wie sie im anderen Teilnehmer bereits vorliegt.

Die dermaßen gemeinsam vorliegende, verkürzte Bitsequenz wird nun von Teilnehmer 1 und Teilnehmer 2 in Schritt 49 jeweils lokal auf geeignete Art und Weise aufbereitet, um den eigentlich gewünschten Schlüssel der gewünschten Länge N zu generieren. Auch hierbei gibt es wieder eine Vielzahl von Möglichkeiten, wie diese Aufbereitung erfolgen kann. Eine Möglichkeit ist die Selektion von N Bits aus der gemeinsam vorliegenden, verkürzten Bitsequenz, wobei klar definiert sein muss, welche N Bits zu nehmen sind, z.B. indem einfach immer die ersten N Bits der Sequenz selektiert werden. Ebenfalls möglich ist die Berechnung einer Hashfunktion über die gemeinsam vorliegende, verkürzte Bitsequenz, die einen Hashwert der Länge N liefert. Ganz allgemein kann die Aufbereitung mit jeder beliebigen linearen und nichtlinearen Funktion erfolgen, die bei Anwendung auf die gemeinsam vorliegende, verkürzte Bitsequenz eine Bitsequenz der Länge N Bits zurückliefert. Der Mechanismus der Schlüsselerzeugung aus der gemeinsam vorliegenden, verkürzten Bitsequenz liegt vorzugsweise in beiden Teilnehmern 1 und 2 identisch vor und wird entsprechend auf die gleiche Weise durchgeführt.

Im Anschluss an die Schlüsselgenerierung kann ggf. noch verifiziert werden, dass die von Teilnehmer 1 und 2 generierten Schlüssel tatsächlich identisch sind. Dazu könnte beispielsweise eine Checksumme über die generierten Schlüssel berechnet und zwischen Teilnehmer 1 und 2 ausgetauscht werden. Sind beide Checksummen nicht identisch, so ist offensichtlich etwas fehlgeschlagen. In diesem Fall könnte das beschriebene Verfahren zur Schlüsselgenerierung wiederholt werden.

In einer bevorzugten Variante des Verfahrens zur Schlüsselgenerierung können in verschiedenen Durchläufen zunächst auch eine ganze Reihe von resultierenden, bei Teilnehmer 1 und 2 jeweils vorliegenden, verkürzten Bitsequenzen erzeugt werden, die dann zu einer einzigen großen Sequenz kombiniert werden, bevor der eigentliche Schlüssel davon abgeleitet wird. Dies kann ggf. auch adaptiv erfolgen. Sollte nach dem einmaligen Durchlaufen der beschriebenen Prozedur z.B. die Länge der gemeinsamen, verkürzten Bitsequenz beispielsweise kleiner als die gewünschte Schlüssellänge N sein, so könnte man durch einen erneuten Durchlauf z.B. weitere Bits vor der eigentlichen Schlüsselableitung generieren.

Das generierte, symmetrische Schlüsselpaar kann nun schließlich von Teilnehmer 1 und Teilnehmer 2 in Verbindung mit etablierten (symmetrischen) kryptographischen Verfahren, wie z.B. Chiffren zur Datenverschlüsselung, eingesetzt werden.

Ein Ziel der Verknüpfung der beiden Überlagerungs-Teilwertfolgen, insbesondere mit Hilfe einer logischen ODER-Funktion, ist es, eine Streichung derjenigen Bits vornehmen zu können, die auch ein passiver Angreifer, der die Kommunikation beobachtet, ohne Weiteres aufgrund seiner Beobachtungen ermitteln kann. Eine Alternative dazu wäre, diese Bits zu behalten, dafür aber zunächst deutlich mehr Bits zu generieren als gewünscht (also falls z.B. ein Geheimnis oder ein Schlüssel von 128 Bit gewünscht sind zunächst 300 Bits zu erzeugen) und diese dann am Ende, z.B.mit Hilfe einer Hash-Funktion o.ä., auf die gewünschte Länge zu reduzieren.
Ein möglicher Angreifer (z.B. Teilnehmer 3) kann die öffentliche Datenübertragung zwischen Teilnehmer 1 und Teilnehmer 2 abhören und somit wie beschrieben Kenntnis der effektiven, überlagerten Bitfolgen (S_{eff} und S_{eff}') erlangen. Damit weiß der Angreifer dann allerdings nur, welche Bits in den lokal generierten Bitsequenzen von Teilnehmer 1 und 2 identisch sind und welche nicht. Bei den identischen Bits kann der Angreifer darüber hinaus sogar noch feststellen, ob es sich dabei um eine ,1' oder eine ,0' handelt. Für eine vollständige Kenntnis der resultierenden, verkürzten Bitfolge (und damit der Grundlage zur Schlüsselgenerierung) fehlen ihm aber die Informationen über die nicht identischen Bits. Um dem Angreifer mögliche Angriffe weiter zu erschweren, wird in einer bevorzugten Variante zusätzlich die in den ursprünglichen, lokal erzeugten Bitfolgen der Teilnehmer 1 und 2 identischen Bitwerte gelöscht. Damit verfügt Teilnehmer 3 nur über Informationen, die für die Schlüsselgenerierung gar nicht verwendet werden. Er weiß zwar, dass entsprechend verkürzte Bitfolgen aus den zwischen den lokalen Bitfolgen der Teilnehmer 1 und Teilnehmer 2 unterschiedlichen Bits hervorgehen. Er weiß aber nicht, welche Bits Teilnehmer 1 und Teilnehmer 2 jeweils gesendet haben.

Teilnehmer 1 und Teilnehmer 2 haben zusätzlich zu der Information über die überlagerte Gesamt-Bitfolge noch die Information über die jeweils von ihnen gesendete, lokal generierte Bitfolge. Aus diesem Informationsvorsprung gegenüber einem lediglich der öffentlichen Datenübertragung folgenden Teilnehmer 3 rührt die Tatsache, dass die in Teilnehmer 1 und 2 generierten Schlüssel trotz der öffentlichen Datenübertragung als Grundlage geheim bleiben.

Ein Angreifer (z.B. Teilnehmer 3) kann auch durch Aussendung von Störsignalen versuchen, die Aushandlung eines kryptographischen Schlüssels zwischen Teilnehmer 1 und Teilnehmer 2 gezielt zu verhindern. Ein solcher kann von Teilnehmer 1 oder Teilnehmer 2 beispielsweise erkannt werden, falls die Schlüsselgenerierung (mehrmals) fehlschlägt. In diesem Fall könnten Teilnehmer 1 oder Teilnehmer 2 einen Abbruch der Schlüsselgenerierung und gegebenenfalls veranlassen und gegebenenfalls eine Fehlermeldung ausgeben.

In realen Kommunikationssystemen gibt es ggf. auch die Möglichkeit, durch genaue Messungen auf dem geteilten Übertragungsmedium Rückschlüsse auf die einzelnen Bitsequenzen S_{T1} und S_{T2} der Teilnehmer 1 und 2 zu schließen. Aufgrund von Laufzeitunterschieden könnte ein Angreifer (z.B. Teilnehmer 3) z.B. trotz einer (weitgehend) synchron vorgesehenen Übertragung beispielsweise mit kleinem zeitlichen Vorsprung erst S_{T1} und dann S_{T2} bzw. dann die Überlagerung/ Verknüpfung S_{T1} und dann S_{T2}) empfangen. Somit könnte der Angreifer weitere Rückschlüsse auf beide Sequenzen ziehen. Abhängig von der Ausdehnung und der Art des geteilten Übertragungsmediums wäre hierfür ggf. allerdings eine sehr präzise und somit teure Hardware erforderlich. Bei einem CAN-Segment der Länge 4 m beispielsweise beträgt die maximale Laufzeitdifferenz unter Annahme einer Wellenausbreitung mit Lichtgeschwindigkeit ca. 13 ns.

Um derartige Angriffe darüber hinaus zu erschweren, wird in einer bevorzugten Variante der bereits beschriebenen Ausführungsformen des Verfahrens zur Schlüsselgenerierung als Gegenmaßnahme vorgeschlagen, dass zumindest einer der beiden Teilnehmer 1 und 2, insbesondere beide, die Übertragungszeiten ihrer einzelnen Signale bzw. einzelnen Bits der Bitsequenzen leicht variieren. Eine solche Variation der Übertragungszeiten kann beispielsweise stochastisch erfolgen. Durch einen solchen Jitter wird es einem möglichen Angreifer, der die öffentliche Übertragung auf dem Übertragungskanal zwischen Teilnehmer 1 und 2 mithören kann, deutlich erschwert auf unterschiedliche Start- und Endzeitpunkte der Übertragung der jeweiligen Teilnehmer zu schließen. Mit einer leichten Variation der Übertragungszeiten ist eine Variation gemeint, die weiter sicher stellt, dass zu vorgesehenen Abtastzeiten die entsprechenden Überlagerungen durch in dem beschriebenen Verfahren zur Schlüsselgenerierung auch stabil ausgeprägt sind. Auch möglich ist eine Variation der Übertragungsdauern für bestimmte Signale bzw. Bits.

Auch durch zwischen Teilnehmer 1 und 2 unterschiedliche, für den jeweiligen Teilnehmer charakteristische Signalamplituden bei der Datenübertragung kann ein Angreifer (Teilnehmer 3) auf die Herkunft bestimmter Signal schließen und damit Informationen über die jeweils lokal erzeugten Bitsequenzen der Teilnehmer 1 und 2 gewinnen. In einer weiteren bevorzugten Variante könnten zum gleichen Zweck die Sendeamplituden (im Rahmen der erlaubten Toleranzen) leicht variiert werden. Hierdurch wird eine Zuordnung eines Signals zu einem der Teilnehmer 1 oder 2 durch den Angreifer (Teilnehmer 3) anhand unterschiedlicher Signalamplituden zwischen Teilnehmer 1 und 2 erschwert.

Die vorgestellten Verfahren stellen einen Ansatz zur Generierung symmetrischer, kryptographischer Schlüssel zwischen zwei Knoten unter Ausnutzung von Eigenschaften der Bitübertragungsschicht dar. Der Ansatz eignet sich insbesondere für Drahtgebundene und optische Kommunikationssysteme, sofern diese 'On-Off-Keying' bzw. eine bitweise Bus-Arbitrierung unterstützen (z.B. CAN, TTCAN, CAN-FD, LIN, I2C). Aber auch in drahtlosen, (funkbasierten) Kommunikationssystemen, vorzugsweise mit einer sehr kurzen Distanz zwischen Sender und Empfänger und einer möglichen direkten Sichtverbindung, kann der Ansatz verwendet werden.

Grundsätzlich bieten sich für einen Einsatz alle Kommunikationssystemen an, die eine Unterscheidung von dominanten und rezessiven Bits (wie oben beschrieben) ermöglichen. Die hier beschriebenen Verfahren können damit bei einer Vielzahl von drahtlosen, drahtgebundenen und optischen Kommunikationssystemen eingesetzt werden kann. Besonders interessant ist der beschriebene Ansatz dabei für die Maschine-zu-Maschine-Kommunikation, also für die Übertragung von Daten zwischen verschiedenen Sensoren, Aktuatoren, etc., die im Allgemeinen nur über sehr begrenzte Ressourcen verfügen und ggf. nicht mit vertretbarem Aufwand manuell im Feld konfiguriert werden können.

Weitere Einsatzmöglichkeiten gibt es beispielsweise in der Heim- und Gebäudeautomatisierung, der Telemedizin, Car-to-X-Systemen oder der industriellen Automatisierungstechnik. Besonders interessant ist auch der Einsatz bei zukünftigen Kleinst-Sensoren mit Funkschnittstelle sowie in allen Anwendungsbereichen des CAN-Busses, d.h. insbesondere der Fahrzeugvernetzung oder der Automatisierungstechnik.

## Patentansprüche

1. Verfahren zur Generierung eines Geheimnisses oder Schlüssels in einem Netzwerk (20), wobei das Netzwerk (20) mindestens einen ersten und einen zweiten Teilnehmer (21, 22) mit einem gemeinsamen Übertragungskanal (30) zwischen mindestens dem ersten und dem zweiten Teilnehmer (21, 22) aufweist, wobei der erste und der zweite Teilnehmer (21, 22) jeweils mindestens einen ersten Wert und einen zweiten Wert auf den Übertragungskanal geben können, **dadurch gekennzeichnet, dass** der erste Teilnehmer (21) eine erste Teilnehmerwertfolge und der zweite Teilnehmer (22) eine zweite Teilnehmerwertfolge zur zueinander weitgehend synchronen Übertragung auf dem Übertragungskanal (30) veranlassen und dass der erste Teilnehmer (21) ein gemeinsames Geheimnis oder einen gemeinsamen Schlüssel auf Basis von Informationen über die erste Teilnehmerwertfolge sowie auf Basis einer aus einer Überlagerung der ersten Teilnehmerwertfolge mit der zweiten Teilnehmerwertfolge auf dem Übertragungskanal (30) resultierenden Überlagerungswertfolge und dass der zweite Teilnehmer (22) das gemeinsame Geheimnis oder den gemeinsamen Schlüssel auf Basis von Informationen über die zweite Teilnehmerwertfolge sowie auf Basis der aus der Überlagerung der ersten Teilnehmerwertfolge mit der zweiten Teilnehmerwertfolge auf dem Übertragungskanal (30) resultierenden Überlagerungswertfolge generieren.

2. Verfahren nach Anspruch 1, **dadurch gekennzeichnet, dass** sich auf dem Übertragungskanal (30) ein Zustand entsprechend dem ersten Wert einstellt, wenn sowohl der erste Teilnehmer (21) als auch der zweite Teilnehmer (22) eine Übertragung des ersten Werts über den Übertragungskanal veranlassen, und sich ein Zustand entsprechend dem zweiten Wert einstellt, wenn der erste Teilnehmer (21) oder der zweite Teilnehmer (22) oder wenn beide eine Übertragung des zweiten Werts über den Übertragungskanal veranlassen.

3. Verfahren nach einem der vorangegangenen Ansprüche, **dadurch gekennzeichnet, dass** die erste Teilnehmerwertfolge und die zweite Teilnehmerwertfolge in dem ersten Teilnehmer (21) bzw. in dem zweiten Teilnehmer (22) lokal, insbesondere mit Hilfe eine Zufallsgenerators oder Pseudozufallsgenerators, erzeugt wird.

4. Verfahren nach einem der vorangegangenen Ansprüche, **dadurch gekennzeichnet, dass** die erste Teilnehmerwertfolge und die zweite Teilnehmerwertfolge jeweils eine erste Teilwertfolge und eine zweite Teilwertfolge aufweisen, wobei die zweite Teilwertfolge aus der ersten Teilwertfolge hervorgeht, indem erste Werte zu zweiten Werten getauscht werden und zweite Werte zu ersten Werten getauscht werden.

5. Verfahren nach Anspruch 4, **dadurch gekennzeichnet, dass** die Überlagerungswertfolge eine erste Überlagerungs-Teilwertfolge aus der Überlagerung der ersten Teilwertfolgen und eine zweite Überlagerungs-Teilwertfolge aus der Überlagerung der zweiten Teilwertfolgen aufweist, und dass der erste Teilnehmer (21) und der zweite Teilnehmer (22) jeweils die erste Überlagerungs-Teilwertfolge mit der zweiten Überlagerungs-Teilwertfolge verknüpfen, insbesondere mit einer logischen ODER-Funktion.

6. Verfahren nach Anspruch 5, **dadurch gekennzeichnet, dass** der erste Teilnehmer (21) und der zweite Teilnehmer (22) jeweils aus dem Ergebnis der Verknüpfung der Überlagerungs-Teilwertfolgen ableiten, welche Stellen ihrer Teilnehmerwertfolge einen Wert identisch mit einem Wert an der gleichen Position der Teilnehmerwertfolge des anderen Teilnehmers aufweisen, dass der erste Teilnehmer (21) und der zweite Teilnehmer (22) jeweils diese Stellen streichen und dass sie somit jeweils eine verkürzte Wertfolge erhalten.

7. Verfahren nach Anspruch 6, **dadurch gekennzeichnet, dass** der erste Teilnehmer (21) seine verkürzte Wertfolge invertiert und damit die verkürzte Wertfolge des zweiten Teilnehmers (22) erhält und dass der erste Teilnehmer (21) aus seiner invertierten verkürzten Wertfolge und der zweite Teilnehmer (22) aus seiner verkürzten Wertfolge das gemeinsame Geheimnis oder den gemeinsamen Schlüssel generieren.

8. Verfahren nach einem der vorangegangenen Ansprüche, **dadurch gekennzeichnet, dass** das Netzwerk (20) ein CAN-, TTCAN-,CAN-FD-, LIN- oder I2C-Bussystem ist, dass der erste Wert ein rezessiver Buspegel ist und dass der zweite Wert ein dominanter Buspegel ist.

9. Verfahren nach einem der Ansprüche 1 bis 7, **dadurch gekennzeichnet, dass** in dem Netzwerk (20) eine On-Off-Keying-Amplitudenumtastung zur Datenübertragung vorgesehen ist.

10. Verfahren nach einem der vorangegangenen Ansprüche, **dadurch gekennzeichnet, dass** der erste Teilnehmer (21), der zweite Teilnehmer (22) oder beide Teilnehmer (21, 22) Übertragungsparameter, insbesondere ihre Signal-übertragungsdauer, Signalübertragungsstartzeiten, Signalübertragungsamplituden oder eine Kombination hieraus, während der Übertragung ihrer Teilnehmerwertfolgen variieren.

11. Verfahren zur Generierung eines Schlüssels oder eines Geheimnisses in einem ersten Teilnehmer (21) eines Netzwerks (20), wobei der erste Teilnehmer (21) dazu eingerichtet ist, über einen Übertragungskanal (30) von mindestens einem zweiten Teilnehmer (22) des Netzwerks Informationen zu empfangen sowie Informationen an den zweiten Teilnehmer (22) zu übertragen, wobei der erste Teilnehmer (21) dazu eingerichtet ist, mindestens einen ersten Wert und einen zweiten Wert auf den Übertragungskanal (30) zu geben und auf diesem detektieren zu können, **dadurch gekennzeichnet, dass** der erste Teilnehmer (21) eine erste Teilnehmerwertfolge für eine Übertragung weitgehend synchron zu einer Übertragung einer zweiten Teilnehmerwertfolge durch den zweiten Teilnehmer (22) auf dem Übertragungskanal (30) veranlasst und dass der erste Teilnehmer (21) ein Geheimnis oder einen Schlüssel generiert auf Basis von Informationen über die erste Teilnehmerwertfolge sowie auf Basis einer Überlagerungswertfolge, welche auf dem Übertragungskanal aus der Überlagerung der ersten Teilnehmerwertfolge mit der zweiten Teilnehmerwertfolge resultiert.

12. Netzwerk (20) mit mindestens einem ersten und einem zweiten Teilnehmer (21, 22) und einem Übertragungskanal (30), über welchen der erste mit dem zweiten Teilnehmer (21, 22) kommunizieren kann, **dadurch gekennzeichnet, dass** das Netzwerk (20) Mittel umfasst, alle Schritte eines Verfahren nach einem der Ansprüche 1 bis 10 durchzuführen.

13. Vorrichtung, welche dazu eingerichtet ist, als Teilnehmer (21) an einem Netzwerk (30) alle Schritte des Verfahrens nach nach einem der Ansprüche 1-11 durchzuführen.

14. Computerprogramm, welches, wenn geladen und auf einem Computer ausgeführt, dazu eingerichtet ist, alle Schritte eines der Verfahren nach einem der Ansprüche 1 bis 11 durchzuführen.

15. Maschinenlesbares Speichermedium mit einem darauf gespeicherten Computerprogramm nach Anspruch 14.

## Claims

1. Method for generating a secret or a key in a network (20), wherein the network (20) has at least a first subscriber (21) and a second subscriber (22) with a common transmission channel (30) between at least the first subscriber (21) and the second subscriber (22), wherein the first and second subscribers (21, 22) can each pass at least a first value and a second value to the transmission channel, **characterized in that** the first subscriber (21) prompts a first subscriber value sequence and the second subscriber (22) prompts a second subscriber value sequence for largely synchronous transmission with respect to one another on the transmission channel (30), and **in that** the first subscriber (21) generates a common secret or a common key on the basis of information relating to the first subscriber value sequence and on the basis of a superimposition value sequence resulting from superimposition of the first subscriber value sequence and the second subscriber value sequence on the transmission channel (30), and **in that** the second subscriber (22) generates the common secret or the common key on the basis of information relating to the second subscriber value sequence and on the basis of the superimposition value sequence resulting from the superimposition of the first subscriber value sequence and the second subscriber value sequence on the transmission channel (30).

2. Method according to Claim 1, **characterized in that** a state corresponding to the first value is established on the transmission channel (30) if both the first subscriber (21) and the second subscriber (22) prompt transmission of the first value via the transmission channel, and a state corresponding to the second value is established if the first subscriber (21) or the second subscriber (22) or both prompt(s) transmission of the second value via the transmission channel.

3. Method according to one of the preceding claims, **characterized in that** the first subscriber value sequence and the second subscriber value sequence are locally generated in the first subscriber (21) and in the second subscriber (22), in particular with the aid of a random number generator or a pseudo-random number generator.

4. Method according to one of the preceding claims, **characterized in that** the first subscriber value sequence and the second subscriber value sequence each have a first partial value sequence and a second partial value sequence, wherein the second partial value sequence results from the first partial value sequence by exchanging first values with second values and exchanging second values with first values.

5. Method according to Claim 4, **characterized in that** the superimposition value sequence has a first superimposition partial value sequence from the superimposition of the first partial value sequences and a second superimposition partial value sequence from the superimposition of the second partial value sequences, and **in that** the first subscriber (21) and the second subscriber (22) each link the first superimposition partial value sequence to the second superimposition partial value sequence, in particular using a logical OR function.

6. Method according to Claim 5, **characterized in that** the first subscriber (21) and the second subscriber (22) each derive, from the result of linking the superimposition partial value sequences, which locations of their subscriber value sequence have a value identical to a value at the same position of the subscriber value sequence of the other subscriber, **in that** the first subscriber (21) and the second subscriber (22) each delete these locations, and **in that** they therefore each obtain a shortened value sequence.

7. Method according to Claim 6, **characterized in that** the first subscriber (21) inverts its shortened value sequence and therefore obtains the shortened value sequence of the second subscriber (22), and **in that** the first subscriber (21) generates the common secret or the common key from its inverted shortened value sequence and the second subscriber (22) generates the common secret or the common key from its shortened value sequence.

8. Method according to one of the preceding claims, **characterized in that** the network (20) is a CAN, TTCAN, CAN-FD, LIN or I2C bus system, **in that** the first value is a recessive bus level, and **in that** the second value is a dominant bus level.

9. Method according to one of Claims 1 to 7, **characterized in that** on-off keying amplitude-shift keying is provided in the network (20) for the purpose of transmitting data.

10. Method according to one of the preceding claims, **characterized in that** the first subscriber (21), the second subscriber (22) or both subscribers (21, 22) vary/varies transmission parameters, in particular their signal transmission time, signal transmission starting times, signal transmission amplitudes or a combination thereof, during the transmission of their subscriber value sequences.

11. Method for generating a key or a secret in a first subscriber (21) of a network (20), wherein the first subscriber (21) is set up to receive information from at least a second subscriber (22) of the network via a transmission channel (30) and to transmit information to the second subscriber (22), wherein the first subscriber (21) is set up to pass at least a first value and a second value to the transmission channel (30) and to be able to detect them on the latter, **characterized in that** the first subscriber (21) prompts a first subscriber value sequence for transmission largely in sync with transmission of a second subscriber value sequence by the second subscriber (22) on the transmission channel (30), and **in that** the first subscriber (21) generates a secret or a key on the basis of information relating to the first subscriber value sequence and on the basis of a superimposition value sequence which results from the superimposition of the first subscriber value sequence and the second subscriber value sequence on the transmission channel.

12. Network (20) having at least a first subscriber (21) and a second subscriber (22) and a transmission channel (30) via which the first subscriber (21) can communicate with the second subscriber (22), **characterized in that** the network (20) comprises means for carrying out all steps of a method according to one of Claims 1 to 10.

13. Apparatus which is set up, as subscriber (21) to a network (30), to carry out all steps of the method according to one of Claims 1-11.

14. Computer program which, when loaded and executed on a computer, is set up to carry out all steps of one of the methods according to one of Claims 1 to 11.

15. Machine-readable storage medium having a computer program according to Claim 14 stored thereon.

## Revendications

1. Procédé pour générer un secret ou une clé dans un réseau (20), le réseau (20) possédant au moins un premier et un deuxième abonné (21, 22) avec un canal de transmission (30) commun entre au moins le premier et le deuxième abonné (21, 22), le premier et le deuxième abonné (21, 22) pouvant respectivement délivrer au moins une première valeur et une deuxième valeur sur le canal de transmission, **caractérisé en ce que** le premier abonné (21) initie une première séquence de valeurs d'abonné et le deuxième abonné (22) une deuxième séquence de valeurs d'abonné en vue de leur transmission essentiellement synchrone l'une à l'autre sur le canal de transmission (30), et **en ce que** le premier abonné (21) génère un secret commun ou une clé commune sur la base d'informations à propos de la première séquence de valeurs d'abonné ainsi que sur la base d'une séquence de valeurs de superposition résultant d'une superposition de la première séquence de valeurs d'abonné avec la deuxième séquence de valeurs d'abonné sur le canal de transmission (30), et **en ce que** le deuxième abonné (22) génère le secret commun ou la clé commune sur la base d'informations à propos de la deuxième séquence de valeurs d'abonné ainsi que sur la base de la séquence de valeurs de superposition résultant de la superposition de la première séquence de valeurs d'abonné avec la deuxième séquence de valeurs d'abonné sur le canal de transmission (30).

2. Procédé selon la revendication 1, **caractérisé en ce qu'**un état correspondant à la première valeur s'établit sur le canal de transmission (30) lorsque à la fois le premier abonné (21) et le deuxième abonné (22) initient une transmission de la première valeur sur le canal de transmission, et un état correspondant à la deuxième valeur s'établit lorsque le premier abonné (21) ou le deuxième abonné (22) ou lorsque les deux initient une transmission de la deuxième valeur sur le canal de transmission.

3. Procédé selon l'une des revendications précédentes, **caractérisé en ce que** la première séquence de valeurs d'abonné et la deuxième séquence de valeurs d'abonné sont générées localement dans le premier abonné (21) ou dans le deuxième abonné (22), notamment à l'aide d'un générateur aléatoire ou d'un générateur pseudo-aléatoire.

4. Procédé selon l'une des revendications précédentes, **caractérisé en ce que** la première séquence de valeurs d'abonné et la deuxième séquence de valeurs d'abonné possèdent respectivement une première séquence de valeurs et une deuxième séquence de valeurs, la deuxième séquence de valeurs émanant de la première séquence de valeurs **en ce que** des premières valeurs sont échangées contre des deuxièmes valeurs et des deuxièmes valeurs sont échangées contre des premières valeurs.

5. Procédé selon la revendication 4, **caractérisé en ce que** la séquence de valeurs de superposition possède une première séquence de valeurs partielle de superposition issue de la superposition des premières séquences de valeurs et une deuxième séquence de valeurs partielle de superposition issue de la superposition des deuxièmes séquences de valeurs, et **en ce que** le premier abonné (21) et le deuxième abonné (22) combinent respectivement la première séquence de valeurs partielle de superposition avec la deuxième séquence de valeurs partielle de superposition, notamment avec une fonction logique OU.

6. Procédé selon la revendication 5, **caractérisé en ce que** le premier abonné (21) et le deuxième abonné (22) déduisent respectivement du résultat de la combinaison des séquences de valeurs partielles de superposition quels endroits de leur séquence de valeurs d'abonné possèdent une valeur identique à une valeur à la même position de la séquence de valeurs d'abonné de l'autre abonné, **en ce que** le premier abonné (21) et le deuxième abonné (22) annulent respectivement ces endroits et **en ce qu'**ils obtiennent ainsi respectivement une séquence de valeurs raccourcie.

7. Procédé selon la revendication 6, **caractérisé en ce que** le premier abonné (21) obtient sa séquence de valeurs raccourcie inversée et ainsi la séquence de valeurs raccourcie du deuxième abonné (22) et **en ce que** le premier abonné (21), à partir de sa séquence de valeurs raccourcie inversée, et le deuxième abonné (22), à partir de sa séquence de valeurs raccourcie, génèrent le secret commun ou la clé commune.

8. Procédé selon l'une des revendications précédentes, **caractérisé en ce que** le réseau (20) est un système de bus CAN, TTCAN, CAN-FD, LIN ou I2C, **en ce que** la première valeur est un niveau de bus récessif et **en ce que** la deuxième valeur est un niveau de bus dominant.

9. Procédé selon l'une des revendications 1 à 7, **caractérisé en ce qu'**une modulation tout ou rien par déplacement d'amplitude est prévue dans le réseau (20) pour la transmission de données.

10. Procédé selon l'une des revendications précédentes, **caractérisé en ce que** le premier abonné (21), le deuxième abonné (22) ou les deux abonnés (21, 22) font varier leurs paramètres de transmission, notamment leur durée de transmission de signal, leurs moments de début de transmission de signal, leurs amplitudes de transmission de signal ou une combinaison de ceux-ci pendant la transmission de leurs séquences de valeurs d'abonné.

11. Procédé pour générer une clé ou un secret dans un premier abonné (21) d'un réseau (20), le premier abonné (21) étant conçu pour recevoir des informations de la part d'au moins un deuxième abonné (22) du réseau et pour transmettre des informations au deuxième abonné (22) par le biais d'un canal de transmission (30), le premier abonné (21) étant conçu pour délivrer au moins une première valeur et une deuxième valeur sur le canal de transmission (30) et pouvoir la détecter sur celuici, **caractérisé en ce que** le premier abonné (21) initie une première séquence de valeurs d'abonné en vue d'une transmission essentiellement synchrone par rapport à une transmission d'une deuxième séquence de valeurs d'abonné par le deuxième abonné (22) sur le canal de transmission (30), et **en ce que** le premier abonné (21) génère un secret ou une clé sur la base d'informations à propos de la première séquence de valeurs d'abonné ainsi que sur la base d'une séquence de valeurs de superposition qui résulte de la superposition de la première séquence de valeurs d'abonné avec la deuxième séquence de valeurs d'abonné sur le canal de transmission.

12. Réseau (20) comprenant au moins un premier et un deuxième abonné (21, 22) et un canal de transmission (30) par le biais duquel le premier abonné peut communiquer avec le deuxième (21, 22), **caractérisé en ce que** le réseau (20)comprend des moyens pour exécuter toutes les étapes d'un procédé selon l'une des revendications 1 à 10.

13. Dispositif qui est conçu pour, en tant qu'abonné (21) d'un réseau (30), exécuter toutes les étapes du procédé selon l'une des revendications 1 à 11.

14. Programme informatique qui, lorsqu'il est chargé et exécuté sur un ordinateur, est conçu pour exécuter toutes les étapes d'un des procédés selon l'une des revendications 1 à 11.

15. Support d'enregistrement lisible par machine sur lequel est enregistré un programme informatique selon la revendication 14.
